Europäisches Patentamt

European Patent Office

Office européen des brevets

(19)

(11) Numéro de publication: **0 142 413**
**B1**

(12)

# FASCICULE DE BREVET EUROPEEN

(45) Date de publication du fascicule du brevet:
09.03.88

(51) Int. Cl.⁴: **F 16 B 7/04**

(21) Numéro de dépôt: **84402073.5**

(22) Date de dépôt: **16.10.84**

(54) **Dispositif mécanique permettant d'assembler et de renforcer des profilés et procédé d'assemblage de profilés.**

(30) Priorité: **17.10.83 FR 8316464**

(43) Date de publication de la demande:
**22.05.85 Bulletin 85/21**

(45) Mention de la délivrance du brevet:
**09.03.88 Bulletin 88/10**

(84) Etats contractants désignés:
**DE IT**

(56) Documents cités:
**DE - A - 2 413 707**
**FR - A - 1 101 663**
**US - A - 3 864 051**

(73) Titulaire: **Piget, Maurice, 18, rue du Bout de Bas Jouy sur Eure, F-27120 Pacy sur Eure (FR)**

(72) Inventeur: **Piget, Maurice, 18, rue du Bout de Bas Jouy sur Eure, F-27120 Pacy sur Eure (FR)**

(74) Mandataire: **L'Helgoualch, Jean et al, OFFICE PICARD 134 Boulevard de Clichy, F-75018 Paris (FR)**

## Description

La présente invention concerne un dispositif pour la réalisation de structures en profilés et plus particulièrement un dispositif mécanique permettant d'assembler et/ou de renforcer des profilés de formes diverses.

Pour la construction de nombreuses structures telles que cadres, mobiliers, éléments d'architecture intérieure, chassis, etc., on utilise divers types de profilés, obtenus généralement par pliage sur machine à galets, de formes le plus souvent symétriques, et présentant une face ouverte. De tels profilés ouverts son généralement d'une fabrication plus facile et moins coûteuse que des profilés fermés, de forme similaire à fibre continue, mais leurs caractéristiques mécaniques sont moins bonnes. L'emploi de tels profilés ouverts est toutefois indispensable dans certaines constructions, pour des raisons de mise en forme ou d'utilisation, et les constructions obtenues manquent de rigidité, de tenue, et ne peuvent être envisagées que pour de petites dimensions ou pour des applications n'impliquant que de faibles efforts de travail.

Des exemples de dispositifs d'assemblage de profilés creux sont décrits dans les documents DE-A-2 413 707, FR-A-1 101 663 et US-A-3 864 051. Toutefois, ces dispositifs ne sont généralement pas satisfaisants en ce qui concerne la résistance de l'assemblage et ne permettent pas toujours d'assembler directement des profilés par leurs angles.

La présente invention a pour objet un dispositif mécanique permettant de remédier aux inconvénients précités.

L'invention a également pour objet un dispositif mécanique simple permettant d'assembler et/ou de renforcer des profilés ouverts ou fermés, pour réaliser des structures possédant une excellente résistance mécanique.

L'invention a encore pour objet un dispositif d'assemblage et/ou de renforcement de profilés, pour réaliser des structures démontables, en conservant la géométrie de profilés ouverts mais en renforçant sa résistance mécanique.

L'invention a également pour objet un procédé d'assemblage et/ou de renforcement de profilés pour la réalisation de structures diverses.

Le dispositif mécanique à expansion pour l'assemblage et/ou le renforcement de profilés selon l'invention, comporte en combinaison:

- au moins deux cornières susceptibles de s'appliquer à l'intérieur du profilé;
- au moins deux coupelles en forme de calotte sphérique enfilées sur une tige placée entre deux cornières, dont l'une au moins peut prendre appui sur la face interne des cornières, et l'autre, d'un diamètre légèrement plus important, prend appui sur la face interne du profilé, à l'extrémité des cornières;
- des moyens pour serrer les coupelles sur la tige et les presser contre les faces internes des cornières et du profilé.

Suivant une autre caractéristique de l'invention, la face interne des cornières présente des aspérités ou des lumières facilitant le positionnement des coupelles. Ces aspérités peuvent être constituées par des relevés contre lesquels les coupelles prennent appui, à l'exception de la coupelle extrême, d'un diamètre légèrement supérieur à celui des autes, qui prend appui contre la face interne du profilé.

Suivant une forme de mise en œuvre, chaque face interne d'une cornière présente au moins deux relevés disposés dans deux plans parallèles. On peut également prévoir de disposer les relevés suivant des inclinaisons opposées deux à deux. Suivant une variante, les relevés sont remplacés par des lumières dans lesquelles viennent se placer les coupelles qui appuient sur leurs bords.

Il est possible de disposer les coupelles parallèlement, et par exemple on peut prévoir deux coupelles placées entre les cornières, séparées par une entretoise, tandis qu'une troisième coupelle, d'un diamètre légèrement plus important, est bloquée entre l'extrémité des cornières et l'écrou placé sur la tige filetée.

On peut également accoler les coupelles deux à deux, rives contre rives, plus particulièrement dans le cas où les cornières présentent des lumières dans lesquelles viennent s'engager les bords des coupelles. Dans ce cas, il peut s'avérer suffisant de placer deux coupelles accolées face à face entre les cornières et deux coupelles, également accolées face à face, bloquées entre l'extrémité des cornières et l'écrou en bout de tige filetée. Une entretoise sépare les deux groupes de coupelles. Les coupelles peuvent être, dans ce cas, de simples rondelles Belleville.

Lorsque l'on actionne le moyen de serrage, les coupelles extrêmes s'applatissent, leur diamètre augmente, et leurs bords sont comprimés contre la face interne du profilé, par effet de poinçon. Les autres coupelles, bloquées entre la tête de la tige filetée et une entretoise, ou entre deux entretoises successives dans le cas de plusieurs coupelles, s'aplatissent et appuient par leurs bords contre les cornières qu'elles appliquent avec une forte pression contre les parois du profilé.

Pour l'assemblage angulaire de profilés, les cornières ont la forme d'équerre, permettant l'assemblage orthogonal de deux ou plusieurs profilés. L'assemblage à angle droit de deux profilés s'effectue au moyen de deux cornières en équerre identiques comportant une simple équerre, que l'on place dans le plan de l'effort maximal appliqué à l'assemblage de profilés, portant une languette perpendiculaire à chaque aile, sur deux bords non jointifs. L'assemblage orthogonal de trois profilés s'effectue au moyen de trois cornières en équerre identiques, formées par l'assemblage à angle droit de deux cornières simples, par une de leurs extrémités. L'utilisation d'un plus grand nombre de cornières permet d'assembler plusieurs profilés.

Le serrage du mécanisme suivant l'invention pour l'assemblage angulaire de profilés, peut s'effectuer en agissant sur l'écrou ou sur la tête de la tige filetée, par l'intermédiaire d'une clé que l'on introduit par une lumière pratiquée sur une face de chaque profilé, à son extrémité.

Suivant une forme avantageuse de réalisation de l'invention, le dispositif d'assemblage et/ou de renforcement de l'invention peut s'appliquer à des profilés ouverts. Dans ce cas, il est préférable de renforcer le profilé dont l'ouverture comporte deux plis rentrants, par une bande de renforcement dont les bords sont repliés, de telle sorte que la bande, placée dans le profilé, vienne obturer l'ouverture et les bords repliés viennent s'appliquer contre la paroi interne des plus rentrants de l'ouverture. Les cornières sont placées dans le profilé de manières à s'appliquer contre les trois faces continues du profilé et contre la bande de renforcement.

Suivant le procédé d'assemblage et/ou de renforcement de profilés ouverts ou fermés conforme à la présente invention, on engage dans le profilé une tige portant au moins deux coupelles, puis on introduit entre la tige et les parois du profilé, deux cornières en les appliquant contre les parois internes du profilé, et le cas échéant contre une bande de renforcement obturant l'ouverture du profilé ouvert, de telle sorte que l'extrémité des cornières vienne buter contre la ou les coupelles placées en bout de tige, on enfonce l'ensemble dans le profilé jusqu'à la position voulue, et on actionne les moyens de serrage de manière à provoquer l'écrasement de la ou les coupelles extrêmes contre les parois internes du profilé, et l'écrasement des autres coupelles contre les cornières plaquées contre le profilé.

Bien entendu, le mouvement de mise en place des cornières et de la tige portant les coupelles, dans le profilé, est relatif et il est possible soit de faire glisser l'ensemble cornières-tige-coupelles dans un profilé fixe, soit de faire glisser le profilé sur l'ensemble. Ainsi, dans le cas de l'assemblage de trois profilés orthogonaux au moyen de trois cornières appropriées, on met en place les deux premières cornières et la tige portant les coupelles dans le premier profilé, on actionne le moyen de serrage, puis on fait glisser les deux autres profilés sur les ailes de deux premières cornières complétées par la troisième cornière enveloppant les deux tiges, jusqu'à la position voulue, et on actionne les deux moyens de serrage par une clé à travers les lumières pratiquées à l'extrémité des profilés.

Le dispositif suivant l'invention s'applique notamment à la réalisation de structures vitrées et de portes de grandes dimensions par incorporation directe des vitrages dans des profilés ouverts, et évite l'utilisation de parecloses ou joints extérieurs en procurant des surfaces externes sans saillie ni aspérité. Il convient tout particulièrement à la construction de chassis protecteurs pour machines industrielles. De plus, il présente l'avantage d'être démontable.

Les caractéristiques et avantages de l'invention apparaîtront plus en détail dans la description ci-après, relative à des modes préférentiels et non limitatifs de réalisation, en référence aux dessins annexés, qui représentent:

Fig. 1: une vue en perspective, avec découpe partielle, de deux profilés ouverts accordés bout à bout par le dispositif suivant l'invention.

Fig. 2: une coupe du profilé ouvert utilisé dans la fig. 1.

Fig. 3: une coupe de la pièce de renforcement utilisée sur la fig. 1.

Fig. 4: une coupe longitudinale du dispositif de la fig. 1.

Fig. 5: une vue en perspective d'une cornière utilisée dans la fig. 1.

Fig. 6: une vue en perspective d'une coupelle utilisée dans la fig. 1.

Fig. 7: une coupe d'un assemblage de trois profilés par une variante de l'invention.

Fig. 8: une vue en perspective d'une cornière en équerre utilisable dans l'invention.

Fig. 9: une vue en perspective d'un assemblage de deux profilés au moyen de deux cornières en équerre, suivant la fig. 8.

Fig. 10: l'assemblage de la fig. 9 dans sa forme finale.

Fig. 11: une vue en perspective de l'utilisation de trois cornières en équerre, suivant la fig. 8, pour l'assemblage de trois profilés orthogonaux.

Fig. 12: une vue en perspective d'un assemblage de quatre profilés orthogonaux par une variante de l'invention.

Fig. 13: une vue en perspective d'une application du dispositif de l'invention à un profilé fermé.

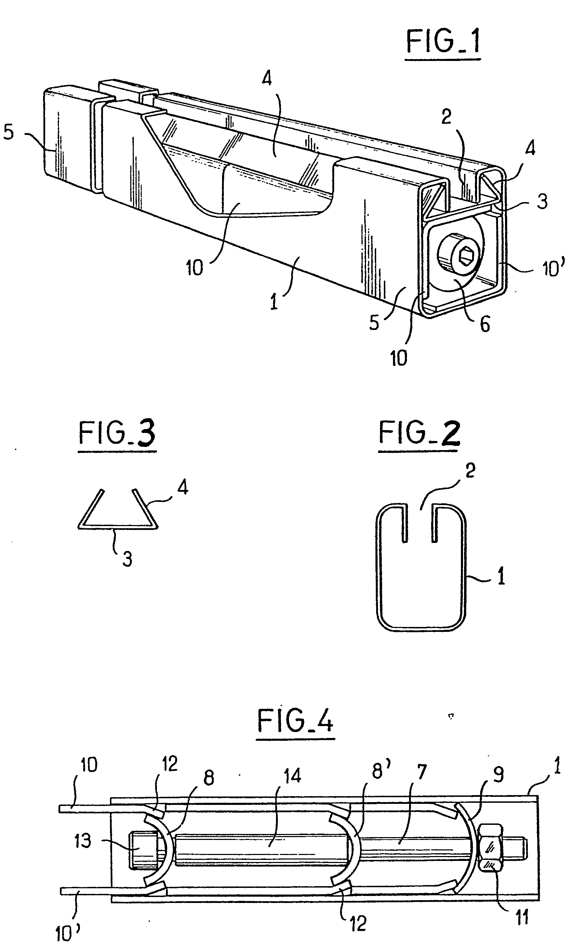

Le dispositif représenté sur la fig. 1, s'adapte sur un profilé (1) en alliage d'aluminium, présentant une ouverture (2), et renforcé au niveau de l'ouverture (2) par une bande (3) en même alliage que le profilé (1) dont les bords (4) sont repliés pour venir s'adapter à l'intérieur du profilé (1) contre les plis de l'ouverture (2) pour s'opposer à l'élargissement de celle-ci. De plus, le pliage des bords (4) augmente la rigidité et le module d'inertie de la bande (3) qui est fixée dans le profilé (1) au niveau de chacune de ses extrémités (5).

La forme de la section du profilé (1) et de la bande (3) est clairement représentée sur les fig. 2 et 3.

Un mécanisme à expansion (6) dont la structure et le fonctionnement sont indiqués ci-après, est introduit dans le profilé (1) à chacune de ses extrémités (5). Comme le montre la fig. 1, le mécanisme (6) prend appui contre les trois pans continus du profilé (1) et contre la bande (3).

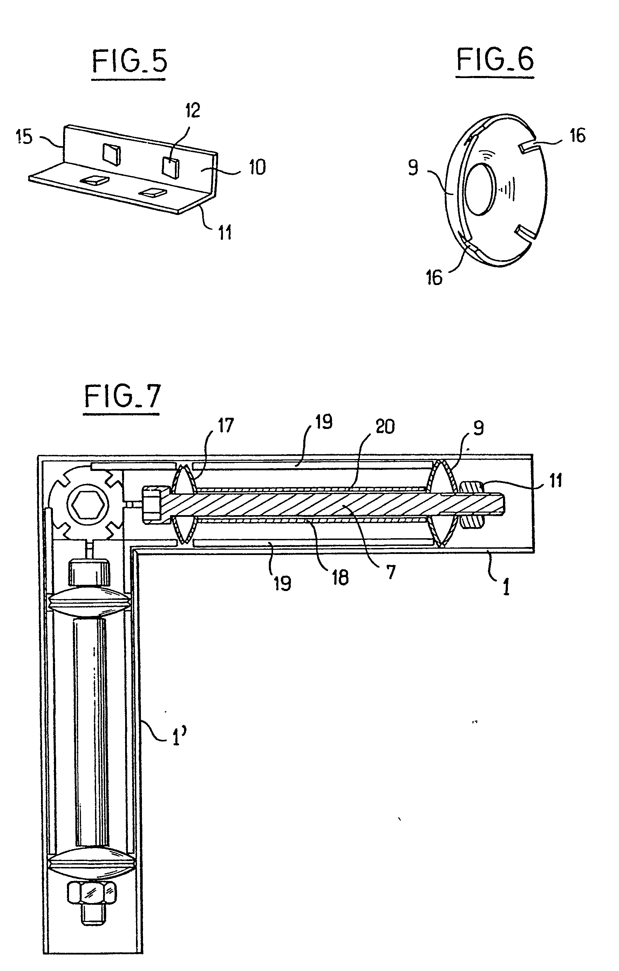

Le mécanisme (6) comporte une tige filetée (7) portant deux coupelles (8) et (8'), et une coupelle (9) d'un diamètre légèrement plus important, agissant sur deux cornières (10) et (10') par serrage au moyen de l'écrou (11). Chacune des deux cornières (10) et (10') a la forme représentée sur la fig. 5, et comporte de petits relevés (12) formés dans la cornière métallique par estampage, à intervalles réguliers. Dans le cas des cornières (10) et (10′), ces relevés (12) sont orientés dans le même sens.

Comme le montre la fig. 4, les deux coupelles (8) et (8′) prennent appui contre les relevés (12) tandis que la coupelle (9) prend appui contre la paroi interne du profilé (1), à l'extrémité des cornières (10) et (10′). La première coupelle (8) est retenue par la tête (13) de la tige filetée (7) tandis qu'elle est séparée de la deuxième coupelle (8′) par l'entretoise (14) qui assure le parallélisme des coupelles au serrage de l'écrou (11). Quand on serre l'écrou (11) sur la tige filetée (7), la coupelle (9) prend appui sur l'extrémité (15) des cornières (10) et (10′) et tend à s'aplatir sous l'effet du serrage, de telle sorte que son diamètre augmente légèrement et ses bords viennent s'incruster dans la paroi interne du profilé (1) et dans la face inférieure de la bande (3). Dans le même temps, les coupelles (8) et (8′) sont comprimées entre les relevés (12) formés dans les cornières (10) et (10′) et la tête (13) de la tige filetée (7), ou l'entretoise (14) selon la coupelle considérée. Bien entendu, le serrage peut se faire en agissant sur la tête (13).

Afin d'obtenir une meilleure élasticité et une déformation plus sensible, la coupelle (9) est pourvue d'évidements (16) représentés sur la fig. 6, disposés sur son bord, à intervalles réguliers.

La fig. 7 représente une variante du dispositif suivant l'invention appliquée à l'assemblage orthogonal de trois profilés dont deux, (1) et (1′), sont vus en coupe, le troisième étant vu en bout. Ces profilés sont du même type que celui de la fig. 1.

Ce dispositif utilise deux coupelles (9) associées face à face, rives contre rives, et deux coupelles (17) de diamètre plus faible, disposées de la même façon, également montées sur la tige (7). Les deux coupelles (17) se trouvent bloquées par leurs bords dans les lumières (18) aménagées dans les cornières (19) tandis que les coupelles (9) sont bloquées entre l'écrou (11) et l'extrémité des cornières (19). L'entretoise (20) maintient à distance constante les deux paires de coupelles. Le serrage, en agissant sur l'écrou (11) ou sur la tête de la tige filetée (7), provoque l'écrasement des coupelles; les deux coupelles (17) repoussent les cornières (19) contre la paroi interne du profilé (1) et contre la face inférieure de la bande (3) (non représentée sur la fig. 7), en agissant sur les bords des lumières (18) dont la largeur est calculée pour permettre le positionnement des coupelles (17) en assurant leur contact permanent avec les cornières (19); sous l'effet de l'écrasement, les deux coupelles (9) viennent poinçonner les parois internes du profilé (1) et la face inférieure de la bande (3). Les coupelles (9) et (17) peuvent être remplacées par des rondelles Belleville.

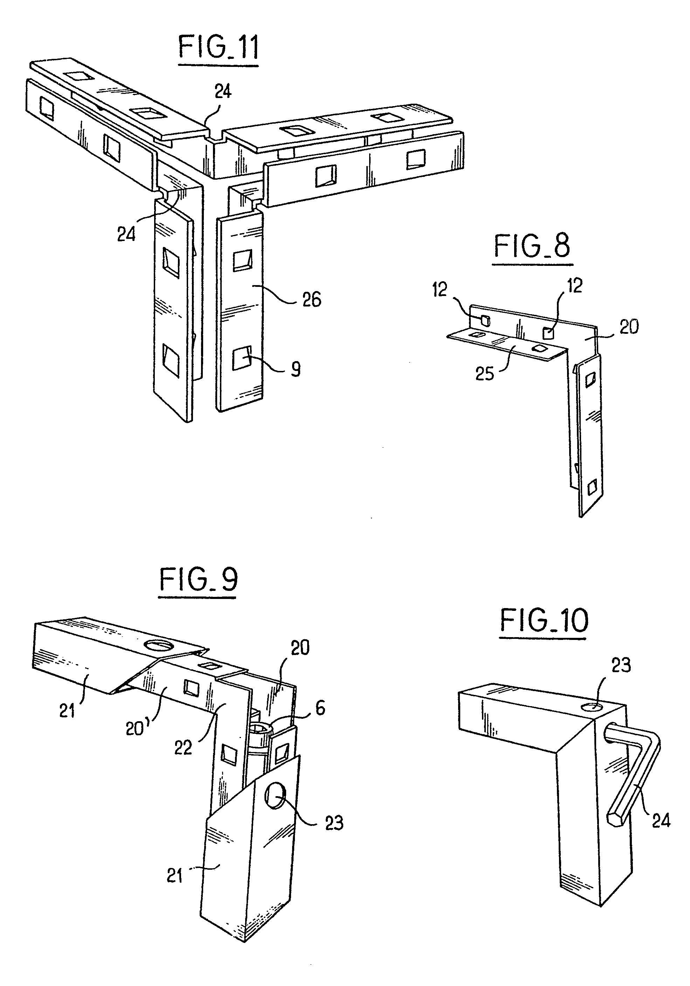

Les cornières (19) utilisées dans le dispositif de la fig. 7 ont une forme en équerre comme celles représentées sur la fig. 11 pour permettre l'assemblage orthogonal de trois profilés.

La fig. 8 représente une cornière en équerre (20) où les relevés de métal (12) ne sont pas parallèles comme sur la cornière (10) mais opposés deux à deux, ce qui permet de simplifier la construction; en effet, dans ce cas, la coupelle (8′) (cf Fig. 4) est inversée pour s'appuyer contre le relevé (12) correspondant, et ainsi les cornières (20) servent par extension pour assurer la tenue de l'assemblage par adhérence ou friction.

Les fig. 9 et 10 montrent le mode d'assemblage des cornières en équerre (20) et (20′), du mécanisme de serrage (6) et des profilés (21). En raison de leur forme, les cornières en équerre (20) procurent une face continue (22) parallèle au plan des axes longitudinaux des deux profilés (21) assemblés à angle droit, ce qui améliore la résistance mécanique compte-tenu des efforts auxquels sont soumis les profilés. Chacun des profilés (21) comporte une lumière (23) permettant d'agir sur le mécanisme de serrage (6) lorsque les profilés sont en place, au moyen de la clé à 6 pans (24). En raison de la position alternée des ailes (25), les deux cornières en équerre (20) sont identiques et interchangeables. Une fois assemblés, les deux profilés (21) ne présentent aucune saillie ou protubérance extérieure, et les lumières (23) peuvent être obturées par une capsule étanche.

L'utilisation de la cornière en équerre (26) présentant les mêmes relevés (9) permet l'assemblage de trois profilés orthogonaux comme le montre la fig. 11.

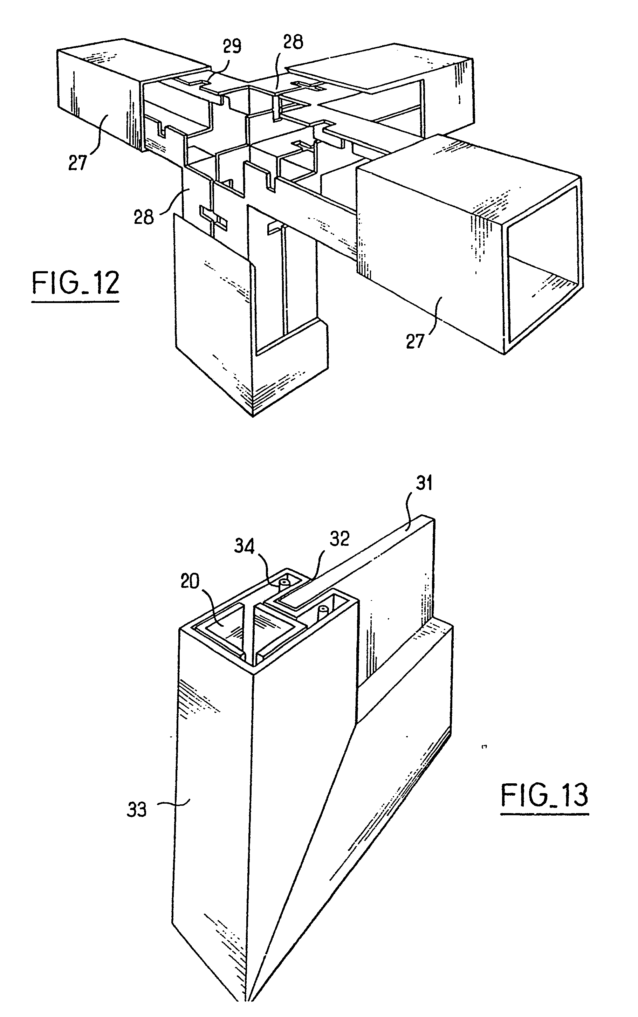

L'assemblage à quatre profilés (27) représenté sur la fig. 12 utilise des cornières en équerre (28) identiques aux cornières (26) mais où les relevés (9) ont été remplacés par des encoches (29). Les cornières (28) soient en face l'une de l'autre, formant une ouverture permettant de placer les coupelles du dispositif de serrage. Comme précédemment, les cornières et les dispositifs de serrage sont mis en place dans les profilés, puis on fait glisser les profilés jusqu'à leur position définitive et on actionne les dispositifs de serrage au moyen d'une clé par la lumière (23) que l'on peut ensuite obturer le cas échéant.

La fig. 13 représente l'utilisation de cornières en équerre identiques aux cornières (20) de la fig. 8 et du mécanisme de serrage pour assembler deux profilés fermés formant la structure d'une protection de machine. Le vitrage (31) est maintenu dans un alvéole (32) du profilé (33) qui renferme les fils conducteurs (34) du circuit de sécurité.

Diverses modifications peuvent être apportées à l'invention sans sortir de son cadre. En particulier, dans le cas d'un profilé à section rectangulaire, ou de forme diverse, il suffit de placer dans le profilé une pièce de forme appropriée, de même longueur que le mécanisme à expansion, pour reconstituer une section carrée adaptée au mécanisme de l'invention.

**Revendications**

1. Dispositif mécanique à expansion pour l'assemblage et/ou le renforcement de profilés (1) ouverts ou fermés caractérisé en ce qu'il comporte en combinaison:

- au moins deux cornières (10, 10') susceptibles de s'appliquer à l'intérieur du profilé (1),
- au moins deux coupelles (8, 8', 9) en forme de calotte sphérique enfilées sur une tige (7) placée entre deux cornières, dont l'une au moins peut prendre appui sur la face interne des cornières (10, 10'), et l'autre, d'un diamètre légèrement plus important, prend appui sur la face interne du profilé (1), à l'extrémité des cornières,
- des moyens pour serrer les coupelles sur la tige et les presser contre les faces internes des cornières (10, 10') et du profilé (1).

2. Dispositif selon la revendication 1, caractérisé en ce que la face interne des cornières présente des aspérités ou des lumières facilitant le positionnement des coupelles.

3. Dispositif selon l'une quelconque des revendications 1 et 2, caractérisé en ce que les moyens pour serrer les coupelles sont constitués par un filetage sur la tige (7), combiné à un écrou (11) et une entretoise (14) séparant les coupelles.

4. Dispositif selon la revendication 2, caractérisé en ce que la face interne des cornières présente des aspérités constituées par des relevés (12) contre lesquels les coupelles (8, 8') prennent appui.

5. Dispositif selon la revendication 4, caractérisé en ce que chaque face interne d'une cornière présente au moins deux relevés (12) disposés dans deux plans parallèles.

6. Dispositif selon la revendication 4, caractérisé en ce que chaque face interne d'une cornière présente deux relevés (12) ayant des inclinaisons opposées.

7. Dispositif selon la revendication 2, caractérisé en ce que la face interne des cornières présente des lumières (18) dans lesquelles viennent se placer les coupelles qui appuient sur leurs bords.

8. Dispositif selon l'une quelconque des revendications 1, 2 et 7, caractérisé en ce que les coupelles sont accolées deux à deux, rives contre rives.

9. Dispositif selon l'une quelconque des revendications précédentes, caractérisé en ce que les cornières sont des cornières en équerre pour l'assemblage angulaire de profilés.

10. Dispositif selon la revendication 1, caractérisé en ce que le profilé est un profilé ouvert, dont l'ouverture présente deux plis rentrants et est obturée par une bande de renforcement (3) présentant des bords repliés (4) qui s'appliquent sur la face interne des plis rentrants de l'ouverture (2).

11. Dispositif selon la revendication 1, caractérisé en ce que chaque profilé d'un assemblage angulaire comporte une lumière (23) à proximité de ses extrémités pour permettre d'actionner le moyen de serrage placé dans le profilé auquel il est associé.

12. Procédé d'assemblage et/ou de renforcement de profilés ouverts ou fermés, au moyen d'un dispositif selon la revendication 1, caractérisé en ce qu'on engage dans le profilé une tige portant au moins deux coupelles, puis on introduit entre la tige et les parois du profilé, deux cornières en les appliquant contre les parois internes du profilé, et le cas échéant contre une bande de renforcement obturant l'ouverture du profilé ouvert, de telle sorte que l'extrémité des cornières vienne buter contre la ou les coupelles placées en bout de tige, on enfonce l'ensemble dans le profilé jusqu'à la position voulue, en on actionne les moyens de serrage de manière à provoquer l'écrasement de la ou les coupelles extrêmes contre les parois internes du profilé, et l'écrasement des autres coupelles contre les cornières plaquées contre le profilé.

**Patentansprüche**

1. Mechanische Dehnungsmittel zum Zusammenbau und/oder zur Verstärkung von offenen oder geschlossenen Profilen (1), dadurch gekennzeichnet, dass sie in Kombination umfassen:

- mindesterns zwei Winkelprofile (10, 10'), die auf das Innere des Profils (1) anwendbar sind,
- wenigstens zwei kugelkalottenförmige Teller (8, 8', 9), die auf eine zwischen zwei Winkelprofilen angeordnete Stange (7) aufgeschoben sind und von denen sich wenigstens eines auf der Innenseite der Winkelprofile (10, 10') abstützt und der andere, der einen etwas grösseren Durchmesser aufweist, sich auf der Innenseite des Profils (1) am Ende der Winkelprofile abstützt,
- Mittel, um die Teller auf der Stange zusammenzudrücken und sie gegen die Innenseiten der Winkelprofile (10, 10') und des Profils (1) zu drükken.

2. Mittel nach Anspruch 1, dadurch gekennzeichnet, dass die Innenseite der Winkelprofile Unebenheiten oder Löcher aufweist, die die Positionierung der Teller erleichtern.

3. Mittel nach Anspruch 1 oder 2, dadurch gekennzeichnet, dass die Mittel zum Zusammendrücken der Teller von einem Gewinde auf der Stange (7) gebildet sind, welches mit einer Mutter (11) und einem die Teller trennenden Abstandsstücke (14) kombiniert ist.

4. Mittel nach Anspruch 2, dadurch gekennzeichnet, dass die Innenseite der Winkelprofile Unebenheiten aufweist, die von Erhebungen (12) gebildet sind, an denen sich die Teller (8, 8') abstützen.

5. Mittel nach Anspruch 4, dadurch gekennzeichnet, dass jede Innenseite eines Winkelprofils wenigstens zwei Erhebungen (12) aufweist, die in zwei parallelen Ebenen angeordnet sind.

6. Mittel nach Anspruch 4, dadurch gekennzeichnet, dass jede Innenseite eines Winkelprofils zwei Erhebungen (12) aufweist, die entgegengesetzte Neigungen besitzen.

7. Mittel nach Anspruch 2, dadurch gekennzeichnet, dass die Innenseite der Winkelprofile Löcher (18) aufweist, in denen die Teller angeordnet sind, die sich auf deren Ränder stützen.

8. Mittel nach einem der Ansprüche 1, 2 oder 7,

dadurch gekennzeichnet, dass die Teller paarweise Rand gegen Rand aneinander gesetzt sind.

9. Mittel nach einem der vorhergehenden Ansprüche, dadurch gekennzeichnet, dass die Winkelprofile mit rechtem Winkel für den Winkelzusammenbau der Profile sind.

10. Mittel nach Anspruch 1, dadurch gekennzeichnet, dass das Profil ein offenes Profil ist, dessen Öffnung zwei zurückbezogene Umbiegungen aufweist und von einem Verstärkungsband (3) verschlossen ist, welches umgebogene Ränder (4) aufweist, die auf die Innenseite der zurückgebogenen Umbiegungen der Öffnung (2) angewendet sind.

11. Mittel nach Anspruch 1, dadurch gekennzeichnet, dass jedes Profil eines Winkelzusammenbaus eine Öffnung (23) in der Nähe seiner Enden aufweist, um das Zusammendrückmittel betätigen zu können, welches in dem Profil angeordnet ist, dem es zugeordnet ist.

12. Verfahren zum Zusammenbauen und/oder Verstärken von offenen oder geschlossenen Profilen durch Mittel gemäss Anspruch 1, dadurch gekennzeichnet, dass man in das Profil eine wenigstens zwei Teller tragende Stange einbringt, dann zwischen die Stange und die Profilwandungen zwei Winkelprofile einführt, wobei sie gegen die Innenwandungen des Profils und gegebenenfalls gegen ein die Öffnung des offenen Profils schliessendes Verstärkungsband gelangen derart, dass das Ende der Winkelprofile gegen den oder die am Ende der Stange angeordneten Teller stösst, dass man die Gesamtheit in das Profil bis zu der gewünschten Stellung hineindrückt und man die Zusammendrückmittel derart betätigt, dass ein Zusammendrücken des oder der äussersten Teller gegen die Innenwandungen des Profils und das Zusammendrücken der anderen Teller gegen die an dem Profil anliegenden Winkelprofile hervorgerufen wird.

## Claims

1. A mechaical expansion device for assembling and/or reinforcing open or closed sections (1) characterized in that it comprises in combination

- at least two angle pieces (10, 10') capable of coming up against the inside of the section (1),
- at least two spherical cups (8, 8', 9), which are strung on a rod (7) placed between two angle pieces and at least one of which can bear on the inner face of the angle pieces (10, 10') and the other, of slightly larger diameter, bears on the inner face of the section (1) at the end of the angle pieces,
- means for clamping the cups on the rod and pressing them against the inner faces of the angle pieces (10, 10') and the section (1).

2. A device as claimed in claim 1, wherein the inner face of the angle pieces has roughnesses or slots which make it easier to position the cups.

3. A device as claimed in any one of claims 1 and 2, wherein the clamping means comprise a thread on the rod (7) combined with a nut (11) and a spacer (14) separating the cups.

4. A device as claimed in claim 2, wherein the inner face of the angle pieces has roughnesses comprising raised portions (12) against which the cups (8, 8') bear.

5. A device as claimed in claim 4, wherein each inner face of an angle piece has at least two raised portions (12) arranged in two parallel planes.

6. A device as claimed in claim 4, wherein each inner face of an angle piece has two raised portions (12) with opposite inclinations.

7. A device as claimed in claim 2, wherein the inner face of the angle pieces comprises slots (18) in which are inserted the cups which bear on their edges.

8. A device as claimed in any one of claims 1, 2 and 7, wherein the cups are connected two by two, edge to edge.

9. A device as claimed in any one of the preceding claims, wherein the angle pieces are right-angle pieces for the angular assembly of sections.

10. A device as claimed in claim 1, wherein the section is an open section, the aperture of which has two set-in folds and is closed off by a reinforcing strip (3) having bent edges (4) which come up against the inner face of the set-in folds of the aperture (2).

11. A device as claimed in claim 1, wherein each section of an angular assembly has a slot (23) in the vicinity of its ends, to make it possible to actuate the clamping means placed in the section with which it is associated.

12. A process for assembling and/or reinforcing open or closed sections by means of a device as claimed in claim 1, wherein a rod carrying at least two cups is engaged in the section, two angle pieces are then introduced between the rod and the walls of the section and are laid against the inner walls of the section and, if appropriate, against a reinforcing strip closing off the aperture of the open section, in such a way that the end of the angle pieces comes up against the cup or cups placed at the end of the rod, the unit as a whole is inserted in the section up to the desired position, and the clamping means are actuated so as to cause the end cup or cups to be crushed against the inner walls of the section and the other cups to be crushed against the angle pieces laid against the section.

FIG_1

FIG_3

FIG_2

FIG_4

## FIG.5

## FIG.6

## FIG.7

FIG.11

FIG.8

FIG.9

FIG.10

FIG_12

FIG_13